Europäisches Patentamt

European Patent Office

Office européen des brevets

(11) Publication number: **0 239 893**
**A2**

## EUROPEAN PATENT APPLICATION

(21) Application number: **87104171.1**

(22) Date of filing: **01.06.84**

(51) Int. Cl.³: **G 11 B 7/24**

(30) Priority: **01.06.83 US 499924**

(43) Date of publication of application:
**07.10.87 Bulletin 87/41**

(84) Designated Contracting States:
**BE DE FR GB IT NL SE**

(60) Publication number of the earlier application
in accordance with Art. 76 EPC: **0 130 698**

(71) Applicant: **UNISYS CORPORATION**
**Unisys Place**
**Detroit Michigan 48232(US)**

(72) Inventor: **Lee, Neville**
**3472 Avenue Ladera**
**Thousand Oaks, CA 91362(US)**

(74) Representative: **Kirby, Harold Douglas Benson et al,**
**G.F. Redfern & Company Marlborough Lodge 14**
**Farncombe Road**
**Worthing West Sussex BN11 2BT(GB)**

(54) **Cost-reduced optical memory disk.**

(57) A novel optical data storage medium is contemplated, one apt for data-modulated writing with a laser beam of predetermined energy and wavelength -- the embodiments here described being characterized by an otpical record structure laid upon a substrate-cap -- and in some cases, this being attached to any rigid carrier means.

READ / WRITE LASER BEAM

$\downarrow \sim B_2$

| CLEAR SUBSTRATE $\underline{55'_2}$ |
| --- |
| (OPTIONAL) SUBBING LAYER |
| ABSORBING |
| SPACER |
| REFLECTOR $\underline{RR_2}$ |
| AA ADHESIVE |
| REFLECTOR $\underline{RR_1}$ |
| SPACER |
| ABSORBING |
| (OPTIONAL) SUBBING |
| CLEAR SUBSTRATE $\underline{55'_1}$ |

$M_2'$

BOND TOGETHER

$M_1'$

**FIG. 8.**

$\uparrow \sim B_1$

READ / WRITE LASER BEAM

EP 0 239 893 A2

Croydon Printing Company Ltd

- 1 -

COST-REDUCED OPTICAL MEMORY DISK

The present invention relates to a novel high density information storage medium, and more particularly to such a medium adapted for recording with low-power laser means.

Introduction, Background:

Workers in the art of recording, storing and detecting and retrieval of digital information are increasingly concerned with optical techniques; e.g., whereby a special 'optical digital data' (ODD) disk may be used for such. By analogy such data is conventionally stored today on magnetic disks for use with high speed digital computers.

This disclosure relates to novel optical recording media and associated apparatus adapted to record, and read-back, digital information using a beam of prescribed radiation energy; it especially relates to such which are cost-reduced and are suited for low power laser equipment.

Workers will agree that the success of an ODD system depends greatly on the storage medium. Workers in the art have, for some time now, pondered how to develop a satisfactory practical ODD disk medium, especially one that is cost-effective and adapted for the low power laser equipment presently available. This invention teaches a novel practical low-cost, mass producible ODD disk design adapted for such purposes.

I have discovered a new optical recording disk design which is surprisingly inexpensive to fabricate, especially as compared with the media described in my cited U.S.S.N. 319,406 -- those media being characterized for the most part as "Winchester" (disk) media since they generally contemplated a rigid aluminum Winchester disk as the carrier and as the substrate for deposition of recording layers. Here, in contrast, I contemplate deposition on the "protective cap" or the like.

Such media will be seen as apt for "non-ablative" recording, i.e., wherein the optical properties of a recording layer are permanently altered by laser heating without need for massive translation or expulsion of material. This hole-formation mechanism is detailed in U.S.S.N. 319,406; it is compatible with an in-contact overcoat, so that a continuous media structure can be employed without need for "air spaces". With this type of concept, an extremely flexible design can be achieved; e.g., in which substrate dimensions and R/W wavelength can easily be tailored for various applications. Furthermore, a very simple media structural concept is taught wherein there is no need to produce a disk surface exhibiting high optical flatness and regularity.

As a feature hereof, I contemplate the use of novel structure, materials, and fabrication methods for such records, especially those exhibiting extended archival life (i.e., which are highly resistant to oxidation or like environmental degradation, during the contemplated use). Thus, little or no "loss" of recorded information should occur over extended (storage) life -- with reflectivity-shifts remaining large enough, and stable enough, to "read". And, novel simplified disk fabrication is taught whereby the disk cost may be significantly reduced and fabrication simplified -- with mass-fabrication being feasible (as opposed to the present practice of "batch-fabrication").

The novel recording media taught herein will be generally assumed as meeting the foregoing criteria; and, where possible, as also meeting one or more of the "Target" performance criteria presented in Table I below. (See also "Optical Properties of Tellurium Films Used for Data Recording" by Ash and Allen, SPIE, Vol. 222, 1980).

European Patent Application 0 049 821 discloses a double-sided optical disc wherein a pair of memory units are spaced apart either by an air gap or by a rigid supportive member such as an aluminium disc or spider. The memory units have a transparent substrate whereon an optically recordable layer is deposited. The spaced memory units have their transparent substrates outermost with the optically sensitive layers innermost and protected by the substrates. The present invention, according to one aspect, seeks to provide improvement thereover by eliminating the need for the air gap or supportive member. According to another aspect the present invention seeks to provide improvement by providing a disc which is fabricated in a single series of coating processes.

European Patent Application 0 079 229 (by the same applicants) shows an optical disc having a tri-layer deposited reflective-layer-downmost with an overlying protective overcoat onto a supportive opaque substrate. The present invention seeks to provide improvement thereover by eliminating the opaque substrate and by providing a method of disc fabrication consisting in just one series of coating processes to form a double-sided disc.

European Patent Application 0 067 095 shows a method of optical-disc fabrication wherein an optically sensitive layer is coated onto a flexible elastic web. The web is then radially stretched before being laminated to a disc-shaped substrate by a glue layer. The present invention seeks to provide improvement over such a disc by providing a double-sided disc which eliminates the need for a supportive substrate and by providing a method of double-sided disc fabrication requiring only a single series of  layer deposition steps.

European Patent Application 0 046 104 discloses an optical disc comprising a transparent substrate having an optical tri-layer structure on a face thereof with the reflective layer furthest from the transparent substrate.  The present invention seeks to provide improvement by providing a fabrication method where such a disc may be made in double sided form in a single series of coating steps and by providing a simplified double-sided structure.

## TABLE I (Target Media Criteria)

1. "High" Sensitivity:
-- allow recording with moderate-power laser means. "Sensitivity" will be understood as minimum laser power needed for bit formation (change in spot reflectivity, akin, to that resulting from formation of a hole, or other void or like change in medium, giving adequate read-out at contemplated recording rate). With the invention, one may typically "write" with a pulse of moderate laser power for a reasonable pulse period -- and not be degraded by read-out (e.g., on repeated playback).

1-A. High S/N: (Adequate read-out):
Signal to noise ratio (for adequate read-out); on the order of about 10-40 dB or more.

2. "Archival Stability":
Able to be used or stored for several years in "normal computer environment" and maintain minimum read-out quality.

3. "Computer Records":
Assume capability to operate with present day high speed digital computers -- e.g., with comparable capabilities to today's magnetic disk storage equipment (cf. high bit density, etc.).

4. "Deposit-able" -- associated film structure can be deposited on a "commercial scale" to give repeatable, controlled characteristics.

5. Overcoat-protected: Absorber film will be covered (e.g., up to a few mils) to mechanically protect it and defocus "surface dirt" without sacrificing above features, e.g., still give adequate read-out (preferably overcoat can also impede heat and contaminant-gases, etc., from reaching absorber film).

6. Minimum Cost:
Significantly less than 100 US dollars.

Thus, it is an object hereof to provide the foregoing, and other related, features and advantages. A more particular object is to do so teaching low-cost ODD media. Another object is to teach such media which is readily mass-produced and which exhibits good sensitivity, even with low-power lasers, as well as giving extended archival life. A further object is to teach fabrication of such media as disks from continuous web substratres. Another related object is to do so while stamping-out one or several ODD disks at a time from a common web structure.

The present invention consists in a double-sided optical recording disc responsive on each side to a write-radiation beam; said disc comprising a pair of optical memory units; each memory unit comprising a clear substrate, an absorber layer on said substrate; a spacer layer on said absorber layer; and a reflector layer on said spacer layer; characterised by said disc being formed by the combination of said pair of optical memory units with said reflector layer in each memory unit being fixed by adhesive directly to the reflective layer from the other of said pair of memory units without the intervention of any common backing.

Brief Description of the Drawings:

These and other features and advantages of the present invention will be appreciated by workers as they become better understood by reference to the following detailed description of the present preferred embodiments, these being considered in conjunction with the accompanying drawings, wherein like reference symbols denote like elements::

FIGS. 1 and 2 provide a cross-sectional, enlarged view of an idealised portion of a prior ODD recording disk;

FIGS. 4 and 5 are like views of a related kind of disk modified so that an inverted tri-layer is deposited upon a transparent substrate.

FIGS. 6A, 6B and 7 are schematic representations of associated fabrication modes.

FIG. 8 is a like representation of an embodiment form of the invention.

FIG. 9 is a schematic illustration of how record disks according to such embodiments can be stamped-out - a pair of such disks being indicated in FIG. 10, while FIGS. 3 and 11 indicate alternative fabrication.

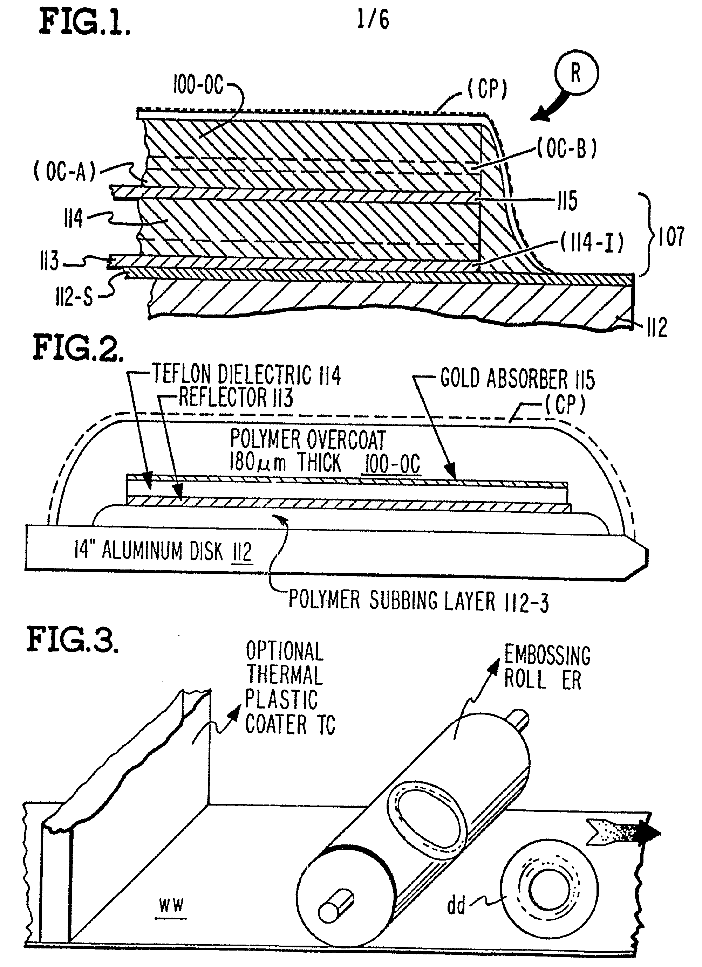

--Example A: prior ODD disk; FIGS. 1, 2:

FIG. 1 depicts, in fragmentary idealized section, an improved ODD disk record R, apt for use in "low power" R/W laser systems (e.g., of the type shown and described in U.S.S.N. 319,406 -- also see schematic side view of full disk in FIG. 2). Record R comprises a substrate disk 112 on which is disposed a "tri-layer" 107 including a "gold island" absorber film 115 atop an anti-reflective optical substrate comprising a dielectric spacer layer 114 on a reflector layer 113. These elements and the associated materials, operations, etc., may be understood as essentially the same as in comparable Examples of U.S.S.N. 319,406 except as otherwise stated. Record R is capped with (encapsulated in) an overcoat 100-oc upon absorber 115. Further details are as follows.

Substrate disk 112 is preferably a well-known bulky, rigid, relatively costly metal Winchester disk of the type presently used for magnetic recording in computer systems (aluminum alloy, 14" diameter, highly polished carrier surface). A "standard" 14" disk 112 was prescribed to better accommodate several gigabytes storage per recording surface. Salient characteristics of the aluminum substrate are its availability, its flatness and its ability to withstand environmental requirements and to accommodate rotation at speeds above 2000 rpm.

While such an aluminum substrate meets most of the gross mechanical requirements, its surface smoothness is not sufficient ("optical flatness" needed), even when it is diamond turned. Thus, at least one subbing layer (112-S) is usually added. This preferably comprises at least one relatively thin polymer subbing coat 112-S, spin-coated onto the surface of disk 112 and then cured
(e.g., with UV radiation). This polymer subbing layer
can provide the required "optically-flat" surface (low
roughness). The subbing will be selected on the basis of
achievable performance, good environmental characteristics
and the ease of application and cure. This "subbing
layer" is adapted, as known in the art, to provide a
smooth surface for deposition of reflector layer 113.

--Tri-layer: Au isles - on Teflon - on Reflector:

This tri-layer optical structure is a tuned optical
network consisting of three primary layers. As mentioned,
reflector 113 and spacer 114 serve to provide an
anti-reflective base on which absorber film 115 is applied,
to complete the known "tri-layer". Here, spacer 114
preferably comprised a transparent "modified fluoropolymer",
or a like organic, of "tri-layer thickness".

The first layer deposited is a reflector layer
113 adapted to be highly reflective at the subject
wavelengths, (e.g., aluminum is known for this) laid atop
subbing 112-S. On reflecting layer 113, is laid a
"quarterwave thickness" of spacer 114 (e.g., "modified
Teflon") which, as workers know, has a thickness adapted to
tune the structure to achieve a minimum reflectance with
the absorber layer 115 (which is deposited atop spacer 114).
Such an organic spacer can also serve as a "thermal barrier",
to help prevent reflector 113 from draining any appreciable
energy from absorber 115 (stable under such heating).

Absorber layer 115 preferably comprises an absorber
metal (e.g., pure gold preferred, or like absorber
compatible with in-contact overcoat), vapor-deposited in
island form (to yield "first minimum reflectance depth",
etc.). The combination of the absorber, dielectric
spacer and reflector provide an optically tuned network
which has a prescribed minimal reflectance at the desired
wavelength. This particular design may be understood as
optimized for a R/W beam from a 633 nanometer Helium-Neon
laser, and also to optimize archival qualities.

Using a "modified Teflon" or a like stable, "less rigid" elastomer as the dielectric material 114 can further enhance archival performance and give superior high temperature stability, as well as minimizing moisture absorption. The spacer material will be compatible with the absorber, draw a minimum of heat from it and facilitate good sensitivity, while bonding well with the subjacent reflector 113. This structure, and associated material selection provides a highly sensitive structure tuned to a minimum reflectance (for maximum absorption) at the laser writing wavelength, while also providing good protection from moisture and other contamination, as is needed for an OD disk of archival quality.

--Polymer overcoat:

After vacuum deposition of the three optical layers, a relatively thick polymer overcoat 100-oc is next applied on absorber 115, to "encapsulate" tri-layer 107 and seal with subbing 112-S. Overcoat 100-oc is intended to function, as known in the art, as a scratch-resistant, seal and barrier to intrusion of contaminants (e.g., water, oxygen vapors) as well as to "defocus" dirt and grime thereon and to accommodate "agglomeration" of the absorber.

That is, one may optically-eliminate (or at least reduce) the effects of surface dust, etc. (on 100-oc) by simply making it thick enough (and transparent to $\lambda o$) to throw it out of focus when absorber 115 is illuminated. Thus, any dust particles settling on the overcoat surface will be displaced far enough from the focal plane of the optical system as to have no appreciable effect on read/write operations.

0239893

Overcoat 100-oc preferably comprises about 180 microns of a suitably-transparent polymer able to maintain good "thickness-control" (e.g., to within about 10-15 microns), being thick enough to accommodate relatively large dust particles. The 180 micron thick overcoat 100-oc will also preferably be covered with a surface wear-cap layer cp adapted for resisting scratches and wear, while inhibiting large dust particles from settling on the outer surface of the overcoat.

Now, workers will recognize that one will use such a record by rotating it (e.g., 1800 rpm contemplated) while using a laser Write Beam to write on a number of information tracks, each track comprising a succession of spaced "bit-sites" ("Transitions" written, there, as reflectivity changes), separated by unwritten areas in which the reflectivity of the absorptive layer 115 is undisturbed (generally as described in S.N. 319,406).

For read-out, a laser beam of relatively constant (reduced) intensity and prescribed wavelength is likewise focused on the information track comprising these bits at the absorber layer as the disk is rotated. Thus a bit can represent a "one" where the write-beam has switched reflectivity along this track; otherwise a "zero" may be understood. The read laser will apply energy insufficient to so change spot reflectivity, and at a frequency at which the undisturbed regions of the track exhibit an "anti-reflective" condition. A photo detector is positioned to receive light reflected from the passing "bit sites" being used, as known to develop an output signal representing the so-recorded "bits". The reflectance changes need only be sufficient to give the needed minimal read-out contrast (e.g., S/N ratio that can be tolerated in the contemplated playback mode).

--Hole-forming (bit-recording) via "agglomeration":

Workers will appreciate that "island" absorber films like these described evidently can be used in a novel advantageous way so that the described low-power/low temperature (laser-beam) heating thereof at a "bit site" can form a "spot" or "hole". These can be used like the well-known "ablated holes" (e.g., as with a Te absorber) but are formed quite differently. That is, "hole-forming" with such "islands", unlike ablative hole-formation, requires no gross migration of absorber material to the edge of the "bit site" or expulsion therefrom. Instead the so-written island material is intended to remain within the bit site, moving very little, especially when covered by an overcoat. That is, when so (slightly) heated to record a "bit" or "hole", the "islands" merely "agglomerate" (mostly) within the bit-site region and shift a bit, rearranging (most of) their mass there, to irreversibly alter optical properties there -- without need for gross migration of material and with little or no ejection of absorber (further details in U.S.S.N. 319,406).

By contrast, examples of various other known methods and approaches may be seen in the following references:

| Patent No. | Inventor(s) |
|---|---|
| 4,216,501 | Bell |
| 4,232,337 | Winslow, et al. |
| 4,243,848 | Utsumi |
| 4,243,850 | Edwards |
| 4,253,019 | Opheij |
| 4,253,734 | Komurasaki |
| 4,268,745 | Okano |

and in:

Other prior art includes: R.A.Bartolini, et al, "Optical Disk Systems Emerge", IEE Spectrum, Aug.1978, pp.20-28.
G.C. Kenney, et al., "An Optical Disk Replaces 25 Mag Tapes", IEEE Spectrum, February 1979; pp. 33-38.
K. Bulthuis, et al., "Ten Billion Bits on a Disk", IEEE Spectrum, August 1979, pp. 26-33.
A.E. Bell, et al., "Antireflection Structures for Optical Recording", IEEE Journal of Quantum Electronics, Vol. QE-14, No. 7, July 1978, pp. 487-495.

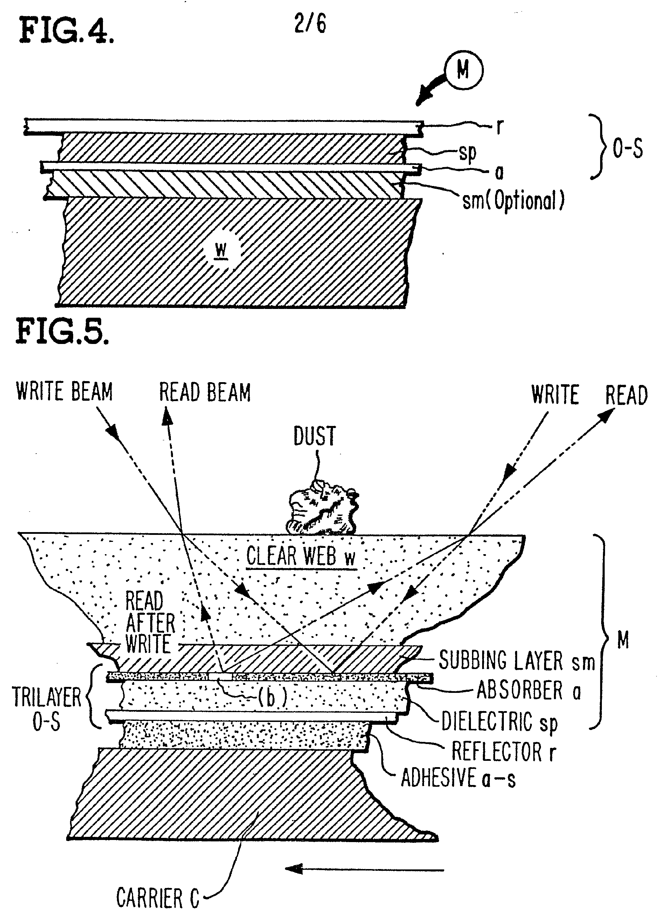

FIGS. 4, 5, 6B: show an example of an inverted tri-layer memory structure. This, and the other following, examples will be understood as
constructed and used as described in U.S.S.N. 319,406 except insofar as otherwise stated.

One feature is that the optical recording structure O-S is deposited on a transparent sheet w to form a memory structure M. That is, structure O-S (FIG. 4), comprising absorber layer a, covered by dielectric spacer layer sp, on which reflector layer r is laid (-- compare layers 115, 114, 113, respectively, of FIG. 1, for example) is deposited on a sheet w, which preferably comprises a web of clear organic material continuously drawn through deposition stations as indicated below. A "smoothing/bonding" film sm (optional) may be applied on web w as required for adequate smoothness and/or bonding to absorber film "a". Layer sm can also be used to enhance island-deposition and improve sensitivity and S/N (according to material selected -- details below). Spacer layer sp is then laid atop absorber a, followed by reflector r, atop sp.

The foregoing is in contradistinction to the
prior art   of FIGS. 1, 2 and U.S.S.N. 319,406, where
the optical recording structure was deposited on a
polished, smoothed aluminum disk surface (e.g., in
FIG. 1, reflector 113 deposited on smoothing layer
112-S of aluminum disk 112; then spacer 114 on 113,
then absorber 115 on spacer 114, then overcoat 100-oc
atop absorber 115).

Thus, in contrast with such "on-disk" deposition,
the subject embodiment (FIG. 4) may be characterized
as an "inverted tri-layer", the order of deposition
being reversed.

Here the substrate web w is also serving as
a protective overcoat (or "cap") for the conventional
tri-layer. Therefore, the selection of substrate material
is extremely important; it can influence the entire
coating process downstream. The substrate w should be
clear, with low transmission loss at read/write laser
wavelengths. It should be free of any form of aberration,
defect or birefringences. The surface of the substrate
should be very flat, smooth, and free of scratches, digs,
or contaminations. The substrate should have very tight
thickness control (high uniformity). The thickness
(e.g., for defocusing surface dust) will depend on the
specific optical system employed as workers know. It
is important that the material is chemically and
mechanically stable. The substrate should be strong,
resistant-to-scratch and should not attract dust particles
(e.g., see FIG. 5).

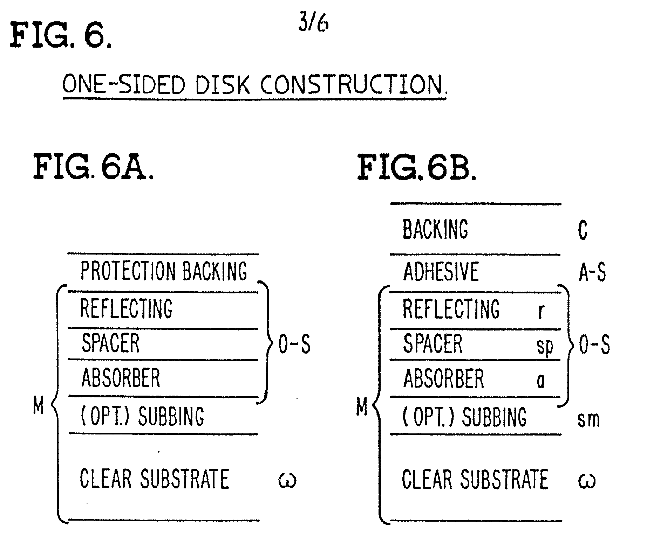

Thus, once the optical R/W structure O-S has
been so formed upon a clear substrate-cover w (e.g.,
as in FIG. 4), the resulting memory structure M may
now be attached to a "backing" or carrier means (e.g.,
a metal disk) as suggested by the FIG. 6B diagram.

Continuous Web Substrate:

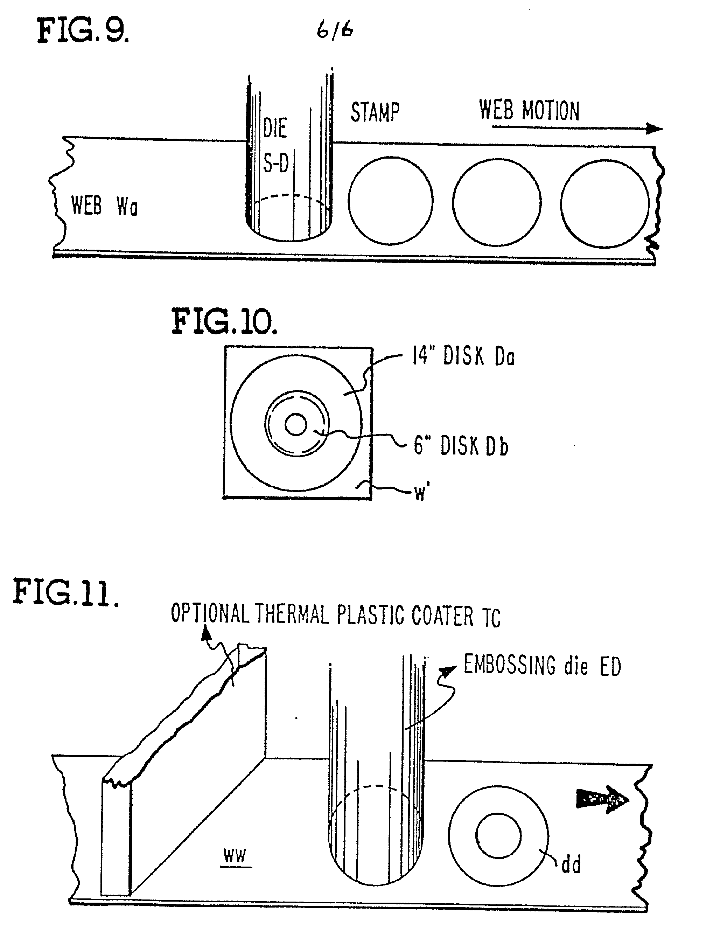

Although not necessary, it is here preferred
to employ a "continuous" fabricating process, using
flexible polymer web w as "substrate-cap" (like results
can also be obtained by a similar process described for
an "injection-molded" substrate; the difference is that
one coats on a continuous web instead of an individual
sheet). After the complete structure has been made,
a disk with any desirable dimension can be stamped-out
as noted elsewhere. It is interesting to note it is
possible to simultaneously stamp out, for example, a
six-inch disk within a 14" area without additional
cost. This is illustrated in FIGS. 10 and 11.

Though quality control may be better using
injection molding, it is possible to emboss servotrack
format information on the web. This is illustrated in
FIGS. 9A and 9B, where an (optional) layer of a thermo-
plastic is coated on the web before the embossing process.

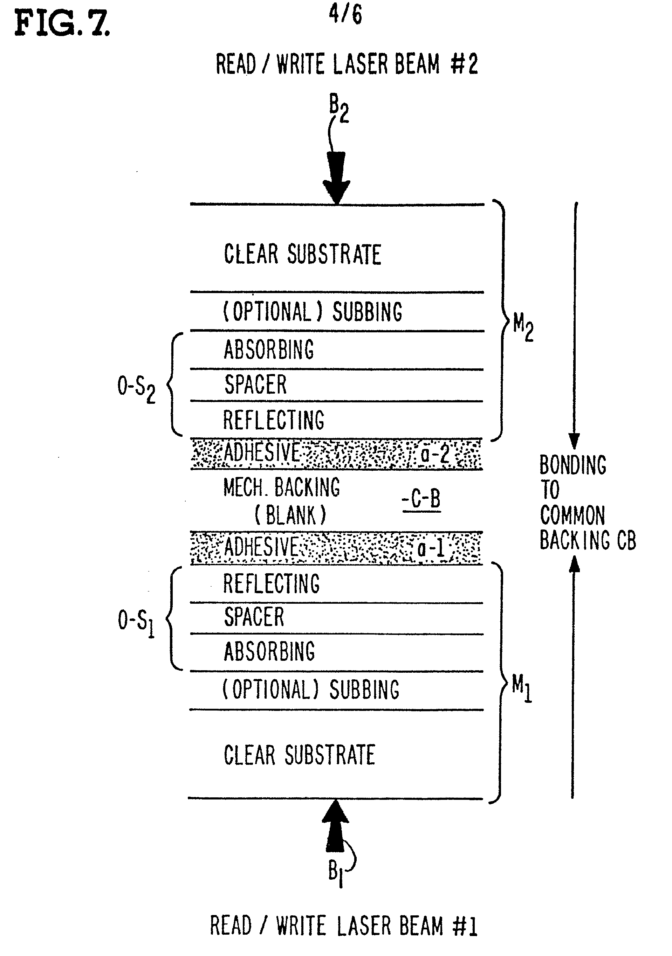

(FIGS. 7-9 are further discussed below).

Subbing Layer Considerations:

While subbing thickness sm is not always required,
it can serve three or more functions; it can improve
the surface quality of the substrate; it can carry
servotrack replication information as discussed above;
and it can provide material more compatible with the
hole formation mechanism in the absorbing layer so that
the sensitivity and signal-to-noise can be optimized.
Also, it can carry a nucleating surface-film adapted
to enhance island-deposition.

Because of these various considerations, smoothing
thickness sm may turn out to be a multiple layer deposited
by mechanical and/or vacuum deposition. For example,
to improve the surface quality, one can use UV curable
polymer applied with mechanical means. For servotrack
replication or embossing purposes, thermo-plastic may
be preferred. To optimize sensitivity and signal-to-noise,
a second "agglomeration-tolerant" overcoat material may
be overlaid, to face the absorber film. The desired
properties of this material are that it be soft or
deformable (e.g., heat shrinkable or otherwise softened
or made to accommodate agglomeration under the influence
of heat). To control the hole forming process so that
signal-to-noise is optimized, a "nucleating layer", like
$SiO_2$, may be desirable next to the absorber.

Optical recording structure O-S may comprise the
elements of the tri-layer described for U.S.S.N. 319,406
and FIGS. 1, 2 above.

Another feature of this memory structure is that
a single memory structure M may be used to form a great
many ODD disks (as noted below); disks may be mass-
fabricated, and formed in a continuous process (also noted below, e.g., see FIGS. 10, 11). Also, memory structure M is, unlike comparable known structures, apt for fabrication apart from, and independently of, associated carrier means, such as a carrier disk (e.g., one need no longer worry about the merits of such a carrier as a deposition-substrate!). Also, such a carrier may be later coupled to one or several memory structures M.

Thus, as indicated (only diagrammatically) in FIG. 6B, memory structure M may be affixed to carrier means C (e.g., a metal disk, or a metal sheet from which a plurality of disks can be formed), such as via a suitable adhesive layer A-S (bonding to reflector film r). And, advantageously, optical structure O-S may be deposited (e.g., in a continuous line) on a web w of "cap material" which is relatively inexpensive, thin, flexible, and kept flat during deposition cycles (biased vs. a flat rigid pick-up plate at deposition coating stations) without regard to its "carrier-qualities". That is, since the so-formed structure(s) M may later be mounted on a separate carrier C, the carrier's surface flatness, smoothness, deposition-substrate-qualities, etc., can be ignored. In effect, and unlike prior fabrication techniques, such an approach "de-couples" the carrier from the ("optical") "load" and so "frees" the design considerably. For instance, workers are well award of the savings involved in replacing a mirror-surfaced Winchester disk with a thin plastic film (substrate web) which can easily be made flatter, smoother and more receptive to the precision coatings comprising optical structure O-S.

FIG. 5 depicts the kind of ODD disk typically resulting from the foregoing -- where the optical structure O-S is formed (in "inverted" form) on a thin web w (as in FIG. 4), then the result is affixed on a metal carrier or "backing" (FIG. 6B -- assume Winchester disk as carrier C).

In FIG. 5, the result will be understood as an ODD disk record after the manner of FIGS. 1, 2 (and U.S.S.N. 319,406), with translation indicated by the arrow. This example of operation assumes that an exemplary "agglomeration-bit" has already been written (see "void" at b) by a prescribed WRITE-beam, then translated to register with an associated READ-beam as indicated (for a "READ-AFTER-WRITE" mode of recording).

Mechanical Backing Consideration:

One can use aluminum blanks ("Winchester disks") as the mechanical backing (carrier). With such an aluminum blank, it will be more appropriate to stamp-out the memory structure M before laminating it to the aluminum blank C.

One may also use a rigid, stable (thermally- and mechanically-) polymer, such as polyetherimide as a less expensive backing. In such a case, it is easier to laminate the structure M to a sheet of backing before stamping-out the composite disk. This will make the procedures of lamination and registration less problematical.

Workers will recognize that such a substitute web w offers the possibility of a "continuous" fabrication sequence, especially for "memory structures" (e.g., to be individually bonded to a carrier disk) -- or for the complete disk in appropriate instances.  This is indicated
in the idealized web-stamping sequence indicated in
FIG. 10, where the substrate web wa (e.g., web w of
EX. I, FIG. 5, on which memory structure M has been
fabricated) can be brought to a "stamping station" where
a stamp-die S-D, or the like, is operated to cut-out
(stamp) like disk shapes as known in the art.

       Further, in certain cases, it will be appropriate
to pre-attach a relatively rigid carrier strip (see
metal carrier C in FIG. 5) to this web-memory configuration
and cut-out the entire, composite disk in a single
operation.  FIG. 11 is a plan view of a relatively
large disk Da to be cut-out of a web w, with the center-
hole therefore used to simultaneously co-stamp a "small"
disk DB, with its own center-hole (e.g., 14" disk and
6" disk as workers will understand).

       FIG.6A:  shows the substrate used as the carrier.
       Instead of a so-coupling the structure M to a
metal carrier (FIGS. 6B, 5), one may in some cases
(e.g., as a savings in cost) use the substrate w as
its own carrier (e.g., increasing thickness, rigidity,
etc., of w accordingly).  In such a case one will likely
wish to seal the "back side" of the reflector r (e.g.,
vs. intrusion of moisture, etc.; mechanical abrasion,
etc.).  Such is indicated (only diagrammatically) in
FIG. 6A.

       FIG. 7 shows (only very schematically)  an
example wherein the "backing" (see C in FIG.6B) is
adapted to carry not one, but two memory structures

0239893

(being otherwise understood as similarly fabricated and used -- e.g., each side having its respective read/write means, etc.). More particularly, where one memory structure $M_1$, including optical unit O-S, is bonded to a carrier means C-B (via adhesive a-1) and·understood as operated upon by R/W beam $B_1$ -- in like manner a second memory structure $M_2$ (including optical unit O-$S_2$)is similarly bonded to the opposite side of C-B (via associated adhesive means a-2), and operated upon by respective read/write beam $B_2$. Cost-effectiveness can thus be enhanced, or course, where such a "two-sided" disk is practical.

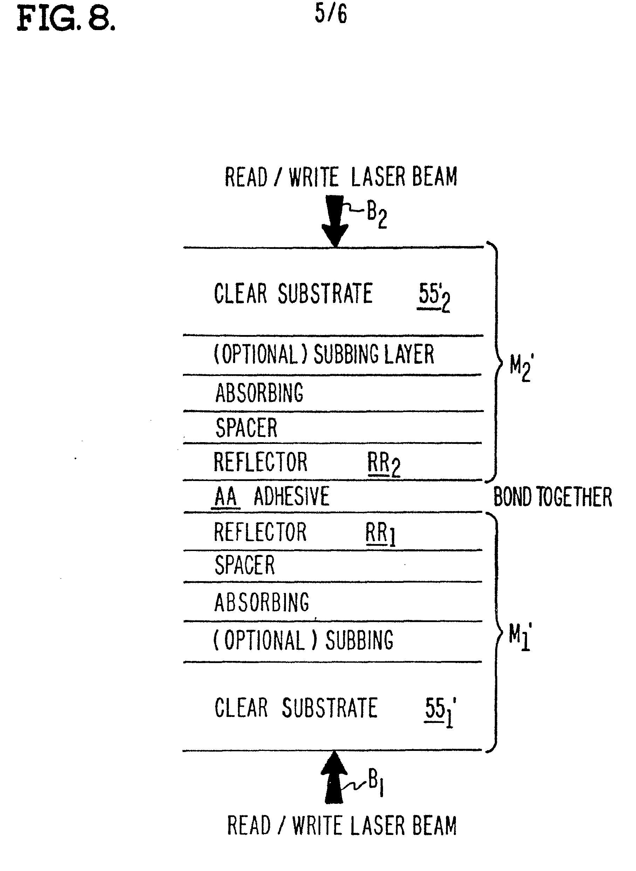

FIG. 8 illustrates an embodiment of the present invention wherein the common backing C-B is eliminated and two such memory structures $M_1$, $M_2$ are inter-coupled with only a common adhesive thickness AA between. Here, it will be understood that the needed rigidity and mechanical strength will be otherwise supplied (.e.g., by a more rigid substrate $SS_1$, $SS_2$ and/or by more rigid reflectors $RR_1$, $RR_2$).

--Molded substrate:

As a (less-preferred) variation to the above described web-substrate, workers will appreciate that other techniques are, in many instances, feasible. For instance, one may mold a discrete substrate; e.g., using well-known "injection molding" techniques (and depositing on this). Good, optically-compatible, injection-molded substrates have been used for optical disks with air-sandwich structure, or with other media (e.g., with a single layer of absorber material).

One of the important advantages of an injection molded substrate is that the servotracking and formatting information can be replicated by various molding processes. In this way, servowriting (on each disk) can be eliminated, with additional cost-savings resulting (e.g., as in FIG. 11 or FIG. 3).

FIG. 11 functionally suggests a related embossing, or like pattern-impressing operation for record disks, wherein a continuous-web ww (e.g., analogous to Wa in FIG. 9 ), will be understood as super-coated (or softened) at a coating station TC to present a relatively "malleable" surface to an embossing station where a die ED impresses a pattern thereon (and may also thermally-cut the disk dd from web ww) according to known techniques. FIG.3 depicts essentially the same operation, except that (one or a plurality of) die impressions are rendered by a die roll ED in a known fashion.

Further modifications of the invention are also possible. For example, the means and methods disclosed herein are also applicable to other disk systems and the like. Also, the present invention is applicable for providing other like media for other forms of recording and/or reproducing systems, such as those in which data is recorded and reproduced thermally.

## CLAIMS

1. A double-sided optical recording disc responsive on each side to a write-radiation beam (B1,B2); said disc comprising a pair of optical memory units (M1,M2); each memory unit (M1,M2) comprising a clear substrate (55'1,55'2), an absorber layer (ABSORBING in M1, ABSORBING in M2) on said substrate (55'1,55'2); a spacer layer (SPACER in M1, SPACER in M2) on said absorber layer (ABSORBING in M1, ABSORBING in M2); and a reflector layer (RR1,RR2) on said spacer layer (SPACER in M1, SPACER in M2); characterised by said disc being formed by the combination of said pair of optical memory units (M1,M2) with said reflector layer (RR1,RR12) in each memory unit (M1,M2) being fixed by adhesive (AA) directly to the reflective layer (RR1,RR2) from the other of said pair of memory units (M1,M2) without the intervention of any common backing.

2. A disc according to Claim 1, wherein said substrate (OC) in one of said pair of memory units (M1,M2) is a thermo-plastic substrate having servo information and formatting information moulded or embossed thereon.

# FIG.1.

Labels: 100-OC, (CP), (OC-A), (OC-B), 115, 114, (114-I), 113, 112-S, 112, 107, R

# FIG.2.

TEFLON DIELECTRIC 114
REFLECTOR 113
GOLD ABSORBER 115
(CP)
POLYMER OVERCOAT
180 μm THICK   100-OC
14" ALUMINUM DISK 112
POLYMER SUBBING LAYER 112-3

# FIG.3.

OPTIONAL THERMAL PLASTIC COATER TC
EMBOSSING ROLL ER
ww
dd

# FIG.4.

- r
- sp
- a
- sm (Optional)

O-S

M

W

# FIG.5.

WRITE BEAM  READ BEAM  WRITE  READ

DUST

CLEAR WEB w

READ AFTER WRITE

TRILAYER O-S

(b)

SUBBING LAYER sm
ABSORBER a
DIELECTRIC sp
REFLECTOR r
ADHESIVE a-s

M

CARRIER C

# FIG. 6.

## ONE-SIDED DISK CONSTRUCTION.

## FIG. 6A.

| PROTECTION BACKING | |
| REFLECTING | } 0-S |
| SPACER | |
| ABSORBER | |
| (OPT.) SUBBING | |
| CLEAR SUBSTRATE | $\omega$ |

M {

## FIG. 6B.

| BACKING | C |
| ADHESIVE | A-S |
| REFLECTING | r | } 0-S |
| SPACER | sp | |
| ABSORBER | a | |
| (OPT.) SUBBING | sm |
| CLEAR SUBSTRATE | $\omega$ |

M {

# FIG. 7.

READ / WRITE LASER BEAM #2

$B_2$

| CLEAR SUBSTRATE |
| (OPTIONAL) SUBBING |
| ABSORBING |
| SPACER |
| REFLECTING |
| ADHESIVE    a-2 |
| MECH. BACKING (BLANK)    -C-B |
| ADHESIVE    a-1 |
| REFLECTING |
| SPACER |
| ABSORBING |
| (OPTIONAL) SUBBING |
| CLEAR SUBSTRATE |

$O$-$S_2$ { ABSORBING, SPACER, REFLECTING }

$M_2$

$O$-$S_1$ { REFLECTING, SPACER, ABSORBING }

$M_1$

BONDING TO COMMON BACKING CB

$B_1$

READ / WRITE LASER BEAM #1

# FIG. 8.

READ / WRITE LASER BEAM

$\sim B_2$

| CLEAR SUBSTRATE | $55'_2$ |
| --- | --- |

(OPTIONAL) SUBBING LAYER

ABSORBING

SPACER

REFLECTOR     $RR_2$

$\left.\right\rbrace M'_2$

AA ADHESIVE     BOND TOGETHER

REFLECTOR     $RR_1$

SPACER

ABSORBING

(OPTIONAL) SUBBING

| CLEAR SUBSTRATE | $55'_1$ |
| --- | --- |

$\left.\right\rbrace M'_1$

$\sim B_1$

READ / WRITE LASER BEAM

# FIG.9.

DIE
S-D

STAMP

WEB MOTION

WEB Wa

# FIG.10.

14" DISK Da

6" DISK Db

W'

# FIG.11.

OPTIONAL THERMAL PLASTIC COATER TC

EMBOSSING die ED

WW

dd